# EUROPÄISCHE PATENTSCHRIFT

(11) **EP 0 960 853 B1**
(45) Veröffentlichungstag und Bekanntmachung des Hinweises auf die Patenterteilung: **04.07.2001**
(21) Anmeldenummer: 99110324.3
(22) Anmeldetag: 27.05.1999
(51) Int. Cl.: C01B 31/08

(54) **Regenerierbarer Adsorber und Verfahren zum Betreiben eines regenerierbaren Adsorbers**
Regenerative adsorber and process for operating a regenerative adsorber
Adsorbeur régénérable et procédé de fonctionnement d' un adsorbeur régénérable

(30) Priorität: 27.05.1998 DE 19823561
(43) Veröffentlichungstag der Anmeldung: 01.12.1999
(73) Patentinhaber: Chmiel, Horst, Prof. Dr.-Ing.habil., 66123 Saarbrücken (DE)
(72) Erfinder: Chmiel, Horst, Prof. Dr.-Ing.habil., 66123 Saarbrücken (DE)
(74) Vertreter: Vièl, Christof, Dipl.-Ing.

(56) Entgegenhaltungen:
- EP-A- 0 460 244
- EP-A- 0 578 371
- DE-A- 4 104 513
- PATENT ABSTRACTS OF JAPAN vol. 096, no. 003, 29. März 1996 (1996-03-29) & JP 07 289892 A (MATSUSHITA ELECTRIC IND CO LTD), 7. November 1995 (1995-11-07)

## Beschreibung

Die Erfindung betrifft einen regenerierbaren Adsorber aus einem flächenförmigen adsorbierenden Material, welches elektrisch leitfähig ist und das über im Anfangs- und im Endpunkt des adsorbierenden Materials mit diesem in Kontakt stehende Elektroden aufgebrachten elektrischen Strom auf eine Temperatur erwärmt werden kann, bei der absorbiertes Material ausgetrieben wird, wobei jeweils mindestens eine Bahn aus dem flächenförmigen adsorbierenden Material mit einem elektrischen Isolator umgeben ist und aus der Bahn Adsorber hergestellt sind. Die Erfindung betrifft weiterhin ein Verfahren zum Betreiben eines regenerierbaren Adsorbers.

Adsorber haben in den letzten Jahren zunehmend an Bedeutung gewonnen, z.B. bei der Entfernung von Schadstoffen aus der Luft oder aus Wasser. Da jedoch die Adsorptionsfähigkeit im Laufe der Zeit abnimmt, ist es erforderlich, den Adsorber zyklisch zu regenerieren. Dies kann mittels Dampfregeneration (Verdrängungsverfahren mittels Wasserdampf) erfolgen, die jedoch bei Aktivkohle beispielsweise nur partiell erfolgreich ist, so daß das adsorbierende Material nach mehreren Regenerationszyklen in seiner Leistungsfähigkeit soweit nachgelassen hat, daß es entsorgt werden muß.

W. Kast schlägt deshalb in seinem Buch "Adsorption aus der Gasphase" (Verlag VCH, Weinheim, 1988) die thermische Regeneration bzw. die Kombination thermischer Regeneration und des Verdrängungsverfahrens vor. Zur Durchführung dieses Verfahrens muß die Aktivkohle jedoch in einem Wärmetauscher erhitzt werden, was in den meisten Fällen bedeutet, daß die Aktivkohle vor der Regeneration aus der Adsorptionsvorrichtung entfernt werden muß, da wegen ihres schlechten Wärmeübergangs ein Beheizen der Adsorbersäule von außen unwirtschaftlich ist.

Aus der DE 29 53 672 A1 sind ein Verfahren und eine Vorrichtung zur Regeneration von Aktivkohle bekannt, bei dem durch eine pulsierende Spannung ein Lichtbogen erzeugt wird, der den adsorbierten Stoff freisetzt. Die Verwendung von Lichtbögen führt jedoch zu einem starken Abbrand und damit zu einem schnellen Verbrauch des Adsorbers.

Weiterhin ist aus der US 4,261,857 A1 ein Verfahren bekannt, bei dem verbrauchte Aktivkohle in einen luftdicht verschlossenen Ofen mit mehreren in vertikaler Richtung in Abständen angebrachten Elektroden eingefüllt wird. Über die Elektroden wird ein elektrischer Strom geleitet, der die Aktivkohle erhitzt, so daß die adsorbierten Stoffe freigesetzt werden.

Bei diesem und auch bei dem aus der US 4,261,857 A1 bekannten Verfahren muß die Aktivkohle in Partikelform vorliegen. Die Verwendung pulver- bzw. granulatförmiger Aktivkohle hat jedoch den Nachteil, daß sowohl der elektrische als auch der Wärmeleitungs-Widerstand hoch ist, so daß die Regenerationseffizienz gering ist. Zudem bilden sich bei der elektrischen Beheizung von partikelförmiger, wirbelfähiger Aktivkohle wegen der ungleichmäßigen Schüttung Wärmenester aus, die bei der anschließenden Wiederverwendung als Adsorbens zur Selbstentzündung führen können. Darüber hinaus ist es bei diesen Verfahren, bei denen eine elektrische Beheizung der Aktivkohle erfolgt, erforderlich, zur Regeneration die Aktivkohle aus der eigentlichen Adsorptionsvorrichtung zu entnehmen.

Um diese Probleme zu vermeiden, wird in der DE 41 04 513 C2 vorgeschlagen, daß die Aktivkohle dadurch gleichmäßig elektrisch leitfähig gemacht wird, daß das adsorbierende Material gepreßt oder faserförmige Aktivkohle verwendet wird, die in Form von Rohren, Hohlfasern oder Matten vorliegt, die von dem schadstoffbeladenen Fluid durchströmbar sind. Diese Anordnung bringt allerdings einen großen Raumbedarf mit sich.

In der JP 07289892 A wird vorgeschlagen, einen adsorbierendes Material auf eine dünne Eisenschicht aufzubringen, diese spiralförmig zu winden und an beiden Enden mit Elektroden zu versehen, um durch Aufheizen die adsorbierten übelriechenden Gase zu zerstören.

Aufgabe der Erfindung ist es somit, einen Adsorber zu entwickeln, der sehr kompakt gebaut ist, mit dem eine hochgradig leistungsfähige Adsorption gegeben ist, und der schnell und sicher regeneriert werden kann.

Diese Aufgabe wird erfindungsgemäß dadurch gelöst, daß der elektrische Isolator katalytisch dotiert ist.

Hierdurch wird das Zerstören des adsorbierten Materials im Bereich des elektrischen Isolators sichergestellt und eine Desorption an die Umgebung vermieden. Derartige Adsorber eignen sich beispielsweise für den Einbau in Fallbelüftungen von Operationsräumen oder Reinräumen sowie im Automobilbereich.

Eine Ausbildung der Erfindung besteht darin, daß die Bahn zickzackförmig übereinandergelegt ist.

Es liegt im Rahmen der Erfindung, daß die Bahn zickzackförmig um Elektroden übereinandergelegt wird, wobei der zwischen dem adsorbierenden Material angeordnete elektrische Isolator ein poröses, flächenförmiges Gebilde ist.

Eine Ausbildung der Erfindung besteht darin, daß der elektrische Isolator aus anorganischen Fasern besteht.

Der Strömungswiderstand dieses z.B. aus Glas oder Keramik bestehenden und in Form eines Vlieses, Gewebes oder Gestricks vorliegenden elektrischen Isolators wird zweckmäßigerweise so gewählt, daß das nachfolgende Adsorbens optimal gleichmäßig durchströmt wird. Die Gleichmäßigkeit der Durchströmung kann noch durch eine poröse Membran, z.B. eine keramische Membran, erhöht werden.

Eine Weiterbildung der Erfindung sieht vor, daß die Elektroden einzeln schaltbar sind.

Erfindungsgemäß ist vorgesehen, daß das adsorbierende Material Aktivkohle ist.

Vorteilhaft ist es, daß die Bahn aus Filzen, Geweben oder Gestricken aus dem adsorbierenden Material besteht.

Im Rahmen der Erfindung liegt auch, daß die Bahn aus Filzen, Geweben oder Gestricken aus dem adsorbierenden Material und dem katalytisch dotierten elektrischen Isolator besteht.

Im Rahmen der Erfindung wurde auch ein Verfahren zum Betreiben eines regenerierbaren Adsorbers gemäß den Ansprüchen 1 bis 8 geschaffen, wobei in einem Adsorptionsschritt Material von dem Adsorber aufgenommen wird und in einem Desorptionsschritt der Adsorber aufgeheizt wird, wobei das hierdurch desorbierte Material beim Vorbeiströmen an dem katalytisch dotierten elektrischen Isolator zerstört wird.

Eine Weiterbildung des Verfahrens besteht darin, daß das elektrisch aufgeheizte adsorbierende Material durch Wärmeleitung den elektrischen Isolator erwärmt.

Es ist vorteilhaft, daß während des Desorptionsschrittes das ausgetriebene adsorbierte Material durch den elektrischen Isolator hindurch abgesaugt wird.

Ebenfalls ist es vorteilhaft, daß das adsorbierende Material zu Beginn der Desorptionsphase mit Inertgas beaufschlagt wird.

Schließlich ist es zweckmäßig, daß beim Übergang vom Adsorptions- zum Desorptionsschritt gleichzeitig eine Umkehrung der Fließrichtung durch den Adsorber erfolgt.

Die Vorteile der Erfindung bestehen im wesentlichen darin, daß ein extrem kompakter, hochgradig leistungsfähiger Adsorber geschaffen wird, der gut durchströmbar ist und aufgrund der gleichförmigen Stromeinleitung sowie der katatlytischen Dotierung schnell und sicher regeneriert werden kann. Durch die erfindungsgemäße Verfahrensgestaltung wird eine extrem schnelle und wirkungsvolle Regeneration des Adsorbers erreicht.

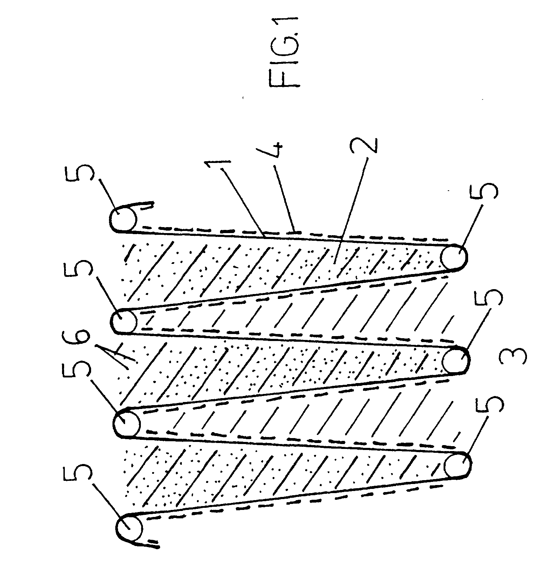

Nachfolgend werden Ausführungsbeispiele der Erfindung anhand von Zeichnungen dargestellt. Es zeigen
- Fig. 1: eine quer geschnittene Darstellung eines Adsorbers aus einer zickzackförmig übereinandergelegten Bahn.

Wie aus Fig. 1 ersichtlich ist, besteht der Adsorber aus einer Bahn aus adsorbierendem Material 1, z.B. Aktivkohle, das als Filz, Vlies, Gewebe oder Gestrick vorliegen kann. Um dieses adsorbierende Material 1 wird ein vorzugsweise poröser elektrischer Isolator 2 angeordnet, wobei auf der angeströmten Seite 3 zwischen dem adsorbierenden Material 1 und dem porösen elektrischen Isolator 2 zusätzlich oder alternativ eine poröse Membran 4 vorgesehen ist.

Diese Bahn wird zickzackförmig um Elektroden 5 gelegt, so daß jeweils zwischen zwei im wesentlich parallel zueinander verlaufenden Teilstrecken aus adsorbierendem Material 1 ein poröser elektrischer Isolator 2 vorgesehen ist, der zur Vermeidung von Kurzschlüssen und zur Vergleichmäßigung der Strömung dient. Die poröse Membran 4 ist im Bereich der Elektroden 5 unterbrochen, so daß diese direkt mit dem adsorbierenden Material 1 in Verbindung stehen. Zur Regeneration des adsorbierenden Materials 1 werden die Elektroden 5 mit Strom beaufschlagt, wobei bei der vorliegenden Lösung eine unterschiedliche Schaltung einzelner Elektroden möglich ist.

Auch auf der dem adsorbierenden Material 1 rückwärtigen (d.h. nach dem Adsorbens durchströmten) Seite befindet sich ein poröses elektrisch isolierendes Material analog demjenigen, das dem adsorbierenden Material 1 strömungsseitig vorgelagert ist.

Im Rahmen der Erfindung wurde vorgesehen, daß dieses rückwärtige anorganische elektrisch isolierende Material 2 auf seiner Oberfläche mit einer katalytischen Dotierung 6 versehen ist, vorzugsweise mit Metallen oder Metallsalzen. Während der Regenerationsphase, d.h. während der elektrischen Beheizung des adsorbierenden Materials 1 erwärmt sich durch Wärmeleitung gleichzeitig das die Katalysatoren tragende elektrisch isolierende Material 2 und das von dem adsorbierenden Material 1 ausgetriebene, d.h. desorbierte Material wird beim Vorbeiströmen an den Katalysatoren zerstört (katalytischeVerbrennung).

Zu Beginn des Desorptionsschrittes wird das adsorbierende Material 1 mit Inertgas, vorzugsweise Stickstoff, beaufschlagt, um eine mögliche Entzündung des adsorbierenden Materials 1 zu vermeiden. Bei dem üblicherweise verwendeten Zwei-Bett-Verfahren, d.h. der Verwendung zweier Adsorber, von denen der eine die Adsorption übernehmen soll, während der zweite regeneriert werden soll, wird zu Beginn des Vorgangs der für die Adsorption vorgesehene Adsorber mit kaltem Inertgas heruntergekühlt. Das den Adsorber verlassende Inertgas wird vorzugsweise dazu verwendet, den für die Regeneration vorgesehenen zweiten Adsorber nach dem oben beschriebenen Verfahren zu inertisieren.

Während der Desorptionsphase, bei der das elektrisch leitfähige adsorbierende Material 1 durch Anlegen eines elektrischen Stromes aufgeheizt wird, wird das adsorbierte Material (Adsorbat) desorbiert und durch den katalytisch dotierten elektrischen Isolator 2 transportiert.

Da der katalytisch dotierte elektrische Isolator 2 in unmittelbarem Kontakt mit dem beheizten adsorbierenden Material steht, wird es von diesem auf Reaktionstemperatur erwärmt. Da durch den angelegten Unterdruck gleichzeitig durch den katalytisch dotierten elektrischen Isolator 2 Verbrennungsluft angesaugt werden kann (was mittels Ventilen gesteuert werden kann), läuft die katalytische Reaktion ohne eine zusätzliche Energiezufuhr ab.

Ein weiterer Vorteil des Unterdrucks im adsorbierenden Material ist, daß die Desorption des Adsorbates vollständig bei niedrigen Temperaturen (gemäß Dampfdruckkurve) ablaufen kann.

Eine zweckmäßige Weiterbildung des Verfahrens besteht darin, daß zwischen dem Adsorptions- und dem Desorptionsschritt die Fließrichtung umgekehrt wird, um sicherzustellen, daß das desorbierte Material nicht in den über den Adsorber mit reinem Medium zu versorgenden Raum einströmt.

## Patentansprüche

1. Regenerierbarer Adsorber aus einem flächenförmigen adsorbierenden Material, welches elektrisch leitfähig ist und das über im Anfangs- und im Endpunkt des adsorbierenden Materials mit diesem in Kontakt stehende Elektroden aufgebrachten elektrischen Strom auf eine Temperatur erwärmt werden kann, bei der adsorbiertes Material ausgetrieben wird, wobei jeweils mindestens eine Bahn aus dem flächenförmigen adsorbierenden Material mit einem elektrischen Isolator umgeben ist und aus der Bahn Adsorber erstellt sind, **dadurch gekennzeichnet,** daß der elektrische Isolator (2) katalytisch dotiert ist.

2. Adsorber gemäß Anspruch 1, **dadurch gekennzeichnet,** daß die Bahn zickzackförmig übereinandergelegt ist.

3. Adsorber gemäß Anspruch 2, **dadurch gekennzeichnet,** daß die Bahn zickzackförmig um Elektroden (5) übereinandergelegt wird, wobei der zwischen dem adsorbierenden Material (1) angeordnete katalytisch dotierte elektrische Isolator (2) ein poröses, flächenförmiges Gebilde ist.

4. Adsorber gemäß Anspruch 1 oder 3, **dadurch gekennzeichnet,** daß der katalytisch dotierte elektrische Isolator (2) aus anorganischen Fasern besteht.

5. Adsorber gemäß Anspruch 3, **dadurch gekennzeichnet,** daß die Elektroden (5) einzeln schaltbar sind.

6. Adsorber gemäß Anspruch 1, **dadurch gekennzeichnet,** daß das adsorbierende Material (1) Aktivkohle ist.

7. Adsorber gemäß Anspruch 1, **dadurch gekennzeichnet,** daß die Bahn aus Filzen, Geweben oder Gestricken aus dem adsorbierenden Material (1) besteht.

8. Adsorber gemäß Anspruch 1, **dadurch gekennzeichnet,** daß die Bahn aus Filzen, Geweben oder Gestricken aus dem adsorbierenden Material (1) und dem katalytisch dotierten elektrischen Isolator (2) besteht.

9. Verfahren zum Betreiben eines regenerierbaren Adsorbers gemäß den Ansprüchen 1 bis 8, gekennzeichnet durch folgende Verfahrensschritte:
- in einem Adsorptionsschritt wird Material von dem Adsorber aufgenommen,
- und in einem Desorptionsschritt wird der Adsorber aufgeheizt, wobei das hierdurch desorbierte Material beim Vorbeiströmen an dem katalytisch dotierten elektrischen Isolator zerstört wird.

10. Verfahren gemäß Anspruch 9, **dadurch gekennzeichnet,** daß das elektrisch aufgeheizte adsorbierende Material durch Wärmeleitung den katalytisch dotierten elektrischen Isolator erwärmt.

11. Verfahren gemäß Anspruch 9 oder Anspruch 10, **dadurch gekennzeichnet,** daß während des Desorptionsschrittes das ausgetriebene adsorbierte Material durch den katalytisch dotierten elektrischen Isolator hindurch abgesaugt wird.

12. Verfahren gemäß einem der Ansprüche 9 bis 11, **dadurch gekennzeichnet,** daß das adsorbierende Material zu Beginn der Desorptionsphase mit Inertgas beaufschlagt wird.

13. Verfahren gemäß einem der Ansprüche 9 bis 12, **dadurch gekennzeichnet,** daß beim Übergang vom Adsorptions- zum Desorptionsschritt gleichzeitig eine Umkehrung der Fließrichtung durch den Adsorber erfolgt,

## Claims

1. A regenerable adsorber of current-conducting, sheet-like adsorbent material, which can be heated to a temperature, sufficient to desorb the adsorbate, by using electric current supplied by electrodes situated at both the starting and final points of said adsorbent material, at least one sheet of said adsorbent material being covered respectively by an electric insulator and the adsorber being produced from said sheet, **wherein** the electric insulator (2) is doted with catalysts.

2. The adsorber of claim 1, **wherein** said sheet is folded in a zig-zag pattern.

3. The adsorber of claim 2, **wherein** said sheet is folded in a zig-zag pattern around electrodes (5), the electric insulator (2), doted with catalysts and placed between the layers of said adsorbent material (1) being a porous, sheet-like structure.

4. The adsorber of claims 1 or 3, **wherein** said electric insulator (2), doted with catalysts, consists of inorganic fibres.

5. The adsorber of claim 3, **wherein** said electrodes (5) can be connected individually.

6. The adsorber of claim **1, wherein** said adsorbent material is made of activated carbon (1).

7. The adsorber of claim 1, **wherein** said sheet consists of felt, cloth or knitted fibres made from the adsorbent material (1).

8. The adsorber of claim 1, **wherein** said sheet consists of felt, cloth or knitted fibres made from the adsorbent material (1) and the electric insulator doted with catalysts (2).

9. Process for the operation of a regenerable adsorber of claims 1 to 8, **wherein** the following process steps exist:
- material is adsorbed by the adsorber in one adsorption step
- the adsorber is heated in one desorption step during which the desorbed material is destroyed as it passes said electric insulator doted with catalysts.

10. The process of claim 9, **wherein** said electrically heated adsorbent material heats said electric insulator doted with catalysts by means of thermal conduction.

11. The process of claims 9 or 10, **wherein** the desorbate is sucked through said electric insulator doted with catalysts during the desorption step.

12. The process according to any of the claims 9 to 11, **wherein** said adsorbent material is supplied with inert gas at the start of the desorption phase.

13. The process according to any of the claims 9 to 12, **wherein** the flow direction through said adsorber is reversed simultaneously at the transition from the adsorption to the desorption step.

## Revendications

1. Adsorbant régénérable se composant d'un matériau adsorbant, plan et électroconducteur pouvant être chauffé par du courant électrique appliqué par des électrodes qui sont en contact avec le matériau au point initial et au point final du matérial adsorbant à une température permettant la désorption des substances adsorbées, au moins un pan du matériau adsorbant et plan étant recouvert d'un isolateur électrique et que des adsorbants sont réalisés avec ce pan, **caractérisé** en ce que l'isolateur électrique (2) est dopé avec des catalyseurs.

2. Adsorbant selon la revendication 1,**caractérisé** en ce que ledit pan est plié en formant des zigzags.

3. Adsorbant selon la revendication 2,**caractérisé** en ce que ledit pan est arrangé en zigzag autour des électrodes (5), l'isolateur électrique (2) dopé avec des catalyseurs placé entre les plis du matériau adsorbant (1) ayant une structure poreuse et plane.

4. Adsorbant selon la revendication 1 ou 3, **caractérisé** en ce que ledit isolateur électrique (2) dopé avec des catalyseurs est composé de fibres minérales.

5. Adsorbant selon la revendication 3,**caractérisé** en ce que lesdites électrodes (5) peuvent être commutées individuellement.

6. Adsorbant selon la revendication 1, **caractérisé** en ce que ledit matériau adsorbant est du charbon actif (1).

7. Adsorbant selon la revendication 1,**caractérisé** en ce que ledit pan est composé de matériau adsorbant (1) sous forme de feutres, de tissus ou de fibres tricotées.

8. Adsorbant selon la revendication 1, **caractérisé** en ce que ledit pan est composé de matériau adsorbant (1) et de l'isolateur électrique (2) dopé avec des catalyseurs sous forme de feutres, de tissus ou de fibres tricotées.

9. Procédé d'utilisation d'un adsorbant régénérable selon les revendications 1 à 8, **caractérisé** par les étapes de procédé suivantes:
- des substances sont adsorbées par l'adsorbant dans une étape d'adsorption,
- et l'adsorbant est chauffé dans une étape de désorption durant laquelle le désorbat est détruit en passant sur l'isolateur électrique dopé avec des catalyseurs.

10. Procédé selon la revendication 9, **caractérisé** en ce que ledit matériau adsorbant, chauffé par un courant électrique, chauffe par conduction thermique l'isolateur électrique dopé avec des catalyseurs.

11. Procédé selon la revendication 9 ou 10, **caractérisé** en ce que le desorbat est aspiré à travers l'isolateur électrique dopé avec des catalyseurs pendant l'étape de désorption.

12. Procédé selon l'une des revendications 9 à 11, **caractérisé** en ce que du gaz inerte est appliqué sur ledit matériau adsorbant au début de l'étape de désorption.

13. Procédé selon l'une des revendications 9 à 12, **caractérisé** en ce que la direction du flux à travers l'adsorbant est inversée au moment de la transition de l'étape d'adsorption à l'étape de désorption.
